# EUROPEAN PATENT APPLICATION

(11) **EP 4 570 354 A1**
(43) Date of publication of application: **18.06.2025**
(21) Application number: 22954839.1
(22) Date of filing: 13.12.2022
(51) Int. Cl.: B01D 53/14, B01D 53/18

(54) **SEPARATION METHOD AND SEPARATION APPARATUS FOR CARBON-DIOXIDE-CONTAINING PHASE CHANGE SOLUTION**

(30) Priority: 12.08.2022 CN 202210970449
(71) Applicant: China Petroleum & Chemical Corporation, Beijing 100728 (CN); Sinopec Nanjing Research Institute of Chemical Industry Co., Ltd., Nanjing, Jiangsu 210048 (CN); Sinopec Nanjing Chemical Industries Co., Ltd., Nanjing, Jiangsu 210048 (CN)
(72) Inventor: YE, Xiaodong, Nanjing, Jiangsu 210048 (CN); JI, Yan, Nanjing, Jiangsu 210048 (CN); JIANG, Yangyang, Nanjing, Jiangsu 210048 (CN); CHEN, Xi, Nanjing, Jiangsu 210048 (CN); GUO, Benshuai, Nanjing, Jiangsu 210048 (CN); YE, Ning, Nanjing, Jiangsu 210048 (CN); HUANG, Hangen, Nanjing, Jiangsu 210048 (CN); MAO, Songbai, Nanjing, Jiangsu 210048 (CN)
(74) Representative: karo IP
(86) International application number: PCT/CN2022/138787
(87) International publication number: WO 2024/031901

(57) **Abstract**

The present invention relates specifically to a separation method and a separation apparatus for CO₂-containing phase change solution. In the present invention, bubbles are used to disturb CO₂-containing phase change solution in order to obtain at least two separated liquid phases. The bubbles and the CO₂-containing phase change solution will form an non-uniform multiphase system. During the process of bubble uplift, the bubbles will combine with the less dense solution system and move upward together to accelerate the separation of different density solution system. At the same time, the thrust effect generated by the bubble generator can promote the form of eddy current in the phase separator, which further accelerates the separation of different density solution system and improves the separation efficiency of the phase change solution.

## Description

### CROSS REFERENCE TO RELATED APPLICARTIONS

This application claims the benefit of the Chinese patent application No. "202210970449.5", filed on August 12, 2022, the content of which is specifically and entirely incorporated herein by reference.

### TECHNICAL FIELD

The invention relates specifically to a separation method and a separation apparatus for CO₂-containing phase change solution.

### BACKGROUND TECHNOLOGY

**Carbon** dioxide (CO₂) capture technology is the most effective and the rapidest way to solve the current problem of huge carbon emissions. Currently, there are three main types of CO₂ capture technologies being vigorously developed, namely post-combustion decarbonization technology, pre-combustion decarbonization technology and oxy-fuel combustion technology. No matter which capture technology is used, the key technology is separation of CO₂, that is, to separate CO₂ from other substances for subsequent processing. Classified by separation principle, power and carrier, CO₂ separation technology mainly includes: absorption, adsorption, membrane separation, cryogenic separation, etc.

According to the current technological progress, the absorption is the most mature and the most widely used CO₂ separation technology. The process of chemical absorption represented by monoethanolamine (MEA) chemical absorption is already very mature. In the alkanolamine-based CO₂ capture technology, the heat required for the regeneration process accounts for a significant proportion of the energy consumption of the entire process. At present, there are two main ways to reduce energy consumption: the first is to develop new solvents which can reduce the activation energy required for the regeneration reaction by the steric-hindrance effect or the activation effect of the solvent, or reduce the required amount of solvent during regeneration by the phase change effect of the solvent; the second is to optimize the heat exchange network of the process through thermal coupling to improve the energy utilization efficiency of the entire process.

The phase change absorbent becomes two liquid phases with a large difference in CO₂ loading after absorbing CO₂. After separation, the lower layer in which almost all CO₂ is concentrated is sent to the desorption tower, and the upper layer returns directly to the absorption tower. So compared with the traditional chemical absorption method, this process can reduce the amount of liquid entering the desorption tower with the same CO₂ removal amount, thereby reducing desorption energy consumption.

CN102500195A announces a two-phase CO₂ capture apparatus in the field of flue gas purification technology. It specifically discloses an apparatus that has one more separator than the traditional capture apparatus. The solution contained in the separator will be divided into two liquid phases with significantly different CO₂ contents. The separated upper and lower liquid phases can be obtained by settling, centrifugal separation or filtration. After separation, the upper liquid is directly recycled, and the lower liquid is sent to the desorption tower for regeneration. This apparatus significantly reduces the energy consumption of CO₂ capture by chemical absorption, thereby reducing the cost of large-scale application of this technology. This technology focuses on two-phase CO₂ capture apparatus.

CN107519732A discloses a regeneration method for strengthening organic phase of the phase change absorbent after desulfurization and decarburization. It proposes that the organic phase from the separator first passes through the standing wave acoustic processor in the boiler to exert displacement effect, cavitation effect and resonance effect of ultrasonic waves on it, which easily breaks the carbamate bonds in the organic phase generating organic amines and CO₂. CO₂ is sent to the regeneration gas separator from the bottom of the regeneration tower, and the regenerated organic amines are returned to the absorption tower for absorption through the lean liquid pump. Among them, the displacement effects of ultrasonic waves can cause the regenerated materials in the organic phase to continuously move, collide, and condense toward antinodes or nodes; the strong impact force and the high-speed microjets generated by the cavitation effect can reduce the frictional resistance of collision, cohesion, and sedimentation of the regenerated materials, and the thermal effect generated at the same time can reduce the viscosity.

CN109092020A provides a CO₂ capture system suitable for phase change absorbent, which includes absorption tower, phase separator, rich phase pump, at least one interstage separator, at least one interstage cooler, mixer, rich liquid pump and desorption tower. The absorption tower includes the tower cavity. The part of the tower cavity between the first entrance of the absorption tower and the second entrance of the absorption tower is divided into multiple stages. Each stage of the tower cavity stores poor liquid containing phase change absorbent, and the phase change absorbent contains nanoparticles. All interstage separators are connected to outlet of the corresponding stage of the absorption tower. The reaction of alkali metals with part of heteroatoms and/or one or more heavy metals, that is, the alkali metal desulfurization method, can improve the quality of raw materials. However, the efficiency of the reaction process of this method is low, especially the utilization rate of alkali metals is not high, and the product contains unreacted alkali metal, which needs to be further processed to meet the requirements of low-sulfur marine fuel oil. How to achieve efficient application of alkali metal desulfurization technology in the production of low-sulfur marine fuel oil is an urgent problem that needs to be overcome in the oil refining field.

### SUMMARY OF THE INVENTION

According to the current published literatures and patents, a large amount of research is mainly carried out around the formulation of phase change absorbent. As mentioned above, the existing technology is mainly focused on the formulation of phase change solvent. However, the stratification of phase change stratification is often achieved by separators that mainly rely on static separation to obtain the two layers. The problem of long static separation time is often overlooked. In order to achieve stable gas processing capacity, continuity of experiments and high adsorption capacity of the solvent, it has to be solved by increasing solution circulation.

On the one hand, the purpose of the present invention is to overcome the problems of long static separation time and insufficient continuity with the same circulation and gas processing capacity in the traditional process of CO₂ capture with phase change absorbent in the existing technology. On the other hand, the purpose of the present invention is also to overcome the problem of weak antioxidant performance of phase change absorbent and provide a separation method and a separation apparatus for CO₂-containing phase change solution. This method improves the separation efficiency of phase change solvent through bubbles disturbing. And increase the capture rate with the same raw gas material and solvent circulation.

In order to achieve the above object, the first aspect of the present invention provides a separation method for CO₂-containing phase change solution. The method includes: using bubbles to disturb CO₂-containing phase change solution in order to obtain at least two separated liquid phases.

The second aspect of the present invention provides a separation apparatus for CO₂-containing phase change solution. The apparatus includes:
an absorption unit for phase change solution to absorb CO₂ to provide the CO₂-containing phase change solution;
a phase separation unit with an exhaust port for separating the CO₂-containing phase change solution to obtain CO₂-rich liquid phase and CO₂-lean liquid phase;
a bubble generation unit for generating bubbles to disturb the CO₂-containing phase change solution in the phase separation unit;
optionally a regeneration unit is included in connection with the phase separation unit for collecting the CO₂-rich liquid phase from the phase separation unit and processing regeneration;
optionally a collection unit is included in connection with the phase separation unit for collecting the CO₂-lean liquid phase from the phase separation unit.

Through the above technical solution, the present invention uses bubbles to disturb CO₂-containing phase change solution in order to obtain at least two separated liquid phases. The bubbles and the CO₂-containing phase change solution will form an non-uniform multiphase system. During the process of bubble uplift, the bubbles will combine with the less dense solution system and move upward together to accelerate the separation of different density solution system. At the same time, the thrust effect generated by the bubble generator can promote the form of eddy current in the phase separator, which further accelerates the separation of different density solution system and improves the separation efficiency of the phase change solution. Compared with traditional cyclone separation and other methods, the separation method of the present invention can improve the separation efficiency of phase change solvent, increase the capture rate with the same raw gas material and solvent circulation and reduce the footprint of the processing unit. Moreover, the parameters of bubble generator can be flexibly adjusted according to the actual separation effect to ensure stable system operation and avoid energy waste. At the same time, bubbles gas can be recovered and recycled as a gas source for the bubble generator.

In the preferred embodiment of the present invention, the gas that generates bubbles is inert gas such as CO₂, which can also remove dissolved oxygen in the lower CO₂-rich liquid phase and improve the antioxidant performance, so the lower CO₂-rich liquid phase can be used for a long time and the decline rate of amine concentration is significantly reduced.

### BRIEF DESCRIPTION OF THE DRAWINGS

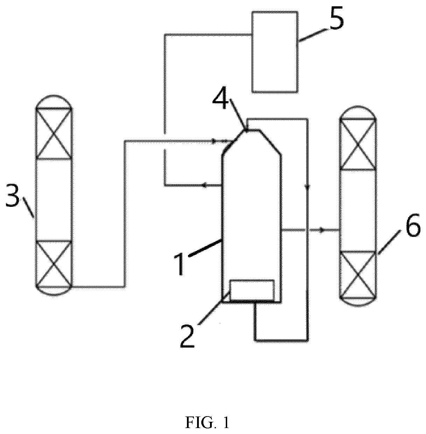

FIG. 1 is the schematic figure of the separation apparatus for CO₂-containing phase change solution provided by a preferred embodiment of the present invention.

### DESCRIPTION OF THE REFERENCE SIGNS

1- phase separator;
2- bubble generator;
3- absorption tower;
4- exhaust port;
5- lean liquid mixing tank;
6- regeneration tower.

### DESCRIPTION OF THE PREFERRED EMBODIMENT

The endpoints and any value of the ranges disclosed herein are not limited to the precise ranges or values. Such ranges or values shall be comprehended as comprising the values adjacent to the ranges or the values. As for numerical ranges, the endpoint values of each range, the endpoint values of each range and the individual point values, and the individual point values can be combined with one another to obtain one or more new numerical ranges, which should be deemed to have been specifically disclosed herein.

In the present invention, the phase change solution refers to liquid-liquid phase change absorbent, that is, the phase change solution still exists in the form of a liquid phase after absorbing CO₂, and because the CO₂ load is different, the CO₂-lean solution and the CO₂-rich solution will separate into two distinct phases.

The first aspect of the present invention provides a separation method for CO₂-containing phase change solution. The method includes: using bubbles to disturb CO₂-containing phase change solution in order to obtain at least two separated liquid phases. The bubbles and the CO₂-containing phase change solution will form an non-uniform multiphase system. During the process of bubble uplift, the bubbles will combine with the less dense solution system and move upward together to accelerate the separation of different density solution system. At the same time, the thrust effect generated by the bubble generator can promote the form of eddy current in the phase separator, which further accelerates the separation of different density solution system and improves the separation efficiency of the phase change solution, increases the capture rate with the same raw gas material and solvent circulation.

In the present invention, using bubbles to disturb CO₂-containing phase change solution can improve the separation efficiency of the phase change solution. The size of the bubbles can be selected in a wide range. According to a preferred embodiment of the present invention, the diameter of the bubbles is not more than 50 µm, including but not limited to 50 µm, 45 µm, 42 µm, 40 µm, 38 µm, 35 µm, 33 µm, 32 µm, 30 µm, 25 µm, 20 µm, 18 µm, 15 µm, 10 µm, 5 µm, preferably 15-30 µm.

In the present invention, the gas-liquid volume ratio between the gas used to generate bubbles and the CO₂-containing phase change solution is not particularly limited. According to a preferred embodiment of the present invention, the gas-liquid volume ratio between the gas used to generate bubbles and the CO₂-containing phase change solution is 10-90, including but not limited to 10, 20, 30, 40, 50, 60, 70, 80, 90, preferably 20-50.

In the present invention, the source of the gas used to generate bubbles is not particularly limited, as long as it does not react with the phase change solution. According to a preferred embodiment of the present invention, the gas used to generate bubbles is selected from inert gases, preferably one or more of CO₂, nitrogen and helium, and more preferably CO₂. In the present invention, the gas that generates bubbles is inert gas such as CO₂, which can also remove dissolved oxygen in the lower CO₂-rich liquid phase and improve the antioxidant performance, so the lower CO₂-rich liquid phase can be used for a long time and the decline rate of amine concentration is significantly reduced.

In the present invention, the separation conditions of the phase change solution are not particularly limited. Conventional separation conditions in the field are applicable to the present invention. Preferably, the phase change conditions include: separation temperature is 35-60 °C, including but not limited to 35 °C, 40 °C, 45 °C, 48 °C, 50 °C, 55 °C, 60 °C.

According to the present invention, preferably, the separation method further includes: regenerating the CO₂-rich liquid phase in the two separated liquid phases.

**In** the present invention, the source of the CO₂ gas is not particularly limited. According to a preferred embodiment of the present invention, CO₂ in the CO₂-containing phase change solution comes from flue gas produced by coal-fired power generation and/or steelmaking. Preferably, the CO₂ content of the flue gas is 10-20 vol%. For example, the CO₂ content includes but is not limited to 10 vol%, 11 vol%, 12 vol%, 13 vol%, 14 vol%, 15 vol%, 16 vol%, 17 vol%, 18 vol%, 19 vol%, 20 vol%.

According to a preferred embodiment of the present invention, the CO₂-containing phase change solution contains 2.0-4.8 mol CO₂/kg solvent, including but not limited to 2.0, 2.2, 2.4, 2.6, 2.8, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8 mol CO₂/kg solvent.

In the present invention, there is no particular limitation on the type of solvent in the phase change solution. All conventional solvents in the field can be used in the present invention. According to a preferred embodiment of the present invention, in the CO₂-containing phase change solution, the solvent includes a first solvent and optionally a second solvent, wherein the first solvent is selected from organic amines, preferably one or more of alkanolamines, amides and fatty amines.

According to a preferred embodiment of the present invention, for example, the first solvent is selected one or more from monoethanolamine, N-methyldiethanolamine, triethylenetetramine, hydroxyethyl ethylenediamine, 2,2-dimethylcyclopropylformamide, N,N-diethylethanolamine and N,N-dimethylcyclohexylamine. In the present invention, the optional second solvent refers that the solvent of the phase change solution may or may not contain second solvent.

According to a preferred embodiment of the present invention, based on the total mass of the solvent, the mass content of the first solvent is 15-80wt%, preferably 15-30wt%.

According to a preferred embodiment of the present invention, the solvent includes both the first solvent and the second solvent. Preferably, the second solvent is selected one or more from C2-C10 alcohols, water, sulfoxides and polyether.

According to a preferred embodiment of the present invention, the second solvent is selected one or more from 1-propanol, n-butanol, t-butanol, water, sulfolane, polyether, 2-amino-2-methyl-1-propanol, triethylene glycol and decanol.

According to a preferred embodiment of the present invention, the solvent of the phase change solution includes: 10-90% monoethanolamine and 10-90% sulfolane based on a scale of 100 wt%.

According to a preferred embodiment of the present invention, the solvent of the phase change solution includes: 10-50% triethylenetetramine, 30-80% N,N-diethylethanolamine and 5-50% 1- propanol based on a scale of 100 wt%.

According to a preferred embodiment of the present invention, the solvent of the phase change solution includes: 10-50% N-methyldiethanolamine, 30-80% n-butanol and 5-50% water based on a scale of 100 wt%.

The method of the present invention can be implemented in any way. As long as it is operated according to the idea of the present invention, the purpose of the present invention can be achieved. According to a preferred embodiment of the present invention, the separation method of the CO₂-containing phase change solution is performed in a separation apparatus, and the separation apparatus includes:
a phase separation unit for separating the CO₂-containing phase change solution to obtain CO₂-rich liquid phase and CO₂-lean liquid phase, and the phase separation unit is provided with an exhaust port;
a bubble generation unit for generating bubbles to disturb the CO₂-containing phase change solution in the phase separation unit;
the separation method includes:
   the bubbles generated by the bubble generation unit disturb the CO₂-containing phase change solution in the phase separation unit, and the gas generated by the bubble generation unit is discharged through the exhaust port.

According to a preferred embodiment of the present invention, the separation method of CO₂-containing phase change solutionthe is performed in a separation apparatus, and the apparatus includes:
a phase separator for separating CO₂-containing phase change solution to obtain the upper CO₂-rich liquid phase and the lower CO₂-lean liquid phase, and the phase separator is provided with an exhaust port;
a bubble generator for generating bubbles to disturb the CO₂-containing phase change solution in the phase separator;
the separation method includes:
   the bubbles generated by the bubble generator disturb the CO₂-containing phase change solution in the phase separator, and the gas generated by the bubble generator is discharged through the exhaust port.

According to a preferred embodiment of the present invention, the second aspect of the present invention provides a separation apparatus for CO₂-containing phase change solution. The apparatus includes:
an absorption unit for phase change solution to absorb CO₂ to provide the CO₂-containing phase change solution;
a phase separation unit with an exhaust port for separating the CO₂-containing phase change solution to obtain CO₂-rich liquid phase and CO₂-lean liquid phase;
a bubble generation unit for generating bubbles to disturb the CO₂-containing phase change solution in the phase separation unit;
optionally a regeneration unit is included in connection with the phase separation unit for collecting the CO₂-rich liquid phase from the phase separation unit and processing regeneration;
optionally a collection unit is included in connection with the phase separation unit for collecting the CO₂-lean liquid phase from the phase separation unit.

According to a preferred embodiment of the present invention, the apparatus includes:
an absorption tower for phase change solution to absorb CO₂ to provide the CO₂-containing phase change solution;
a phase separator with an exhaust port at the upper end for separating the CO₂-containing phase change solution to obtain the lower CO₂-rich liquid phase and the upper CO₂-lean liquid phase;
a bubble generator for generating bubbles to disturb the CO₂-containing phase change solution in the phase separator;
a regeneration tower connected to the lower outlet of the phase separator to collect the lower CO₂-rich liquid phase in the phase separator and process regeneration;
a lean liquid mixing tank connected to the side outlet of the phase separator to collect the upper CO₂-lean liquid phase in the phase separator.

In the present invention, the bubble generator / the bubble generation unit can be installed inside or outside the phase separator / the phase separation unit, as long as the generated bubbles can disturb the CO₂-containing phase change solution.

According to a preferred embodiment of the present invention, the phase separator / the phase separation unit is set to have an internal surface roughness Ra > 0.4 µm, including but not limited to 0.5, 0.6, 0.7, 0.8, 0.9, 1, 2, 3, 4, 5, 6, 7, 8, 9, 10, 11, 12, 13, 14, 15 µm, preferably 5-15 µm.

According to a preferred embodiment of the present invention, the height-to-diameter ratio of the phase separator / the phase separation unit is not less than 4, including but not limited to 4, 5, 6, 7, 8, 9, 10, 11, 12, 13, 14, 15, 16, 17, 18, 19, 20, preferably 10-15.

According to a preferred embodiment of the present invention, a vent valve is provided at the top of the phase separator / the phase separation unit.

In the present invention, the phase separator / the phase separation unit may or may not be filled with fillers. According to a preferred embodiment of the present invention, there is no filler in the phase separator / the phase separation unit.

In the present invention, there is no special requirement for the location of the bubble generator / the bubble generation unit, as long as it can disturb CO₂-containing phase change solution. According to a preferred embodiment of the present invention, the bubble generator / the bubble generation unit is set at the bottom of the phase separator / the phase separation unit.

According to a preferred embodiment of the present invention, the gas discharged from the exhaust port is processed and returned to the bubble generator / the bubble generation unit.

The separation method of the CO₂-containing phase change solution of the present invention will be further explained through specific examples. The examples are only illustrative of the specific embodiments of the method of the present invention, and do not constitute a limitation on the scope of the present invention.

In the following examples, solvent A is a mixture of monoethanolamine (MEA) and sulfolane, where the mass content of monoethanolamine is 20%.

In the following examples, solvent B is a mixture of triethylenetetramine, N,N-diethylethanolamine and 1-propanol, where the mass content of triethylenetetramine is 30%, the mass content of N,N-diethylethanolamine is 50%, and the mass content of 1-propanol is 20%.

In the following examples, solvent C is a mixture of N-methyldiethanolamine, n-butanol and water, where the mass content of n-butanol is 30%, the mass content of water is 50%, and the mass content of N-methyldiethanolamine is 20%.

The following examples are performed in the separation apparatus as shown in the schematic diagram of the separation apparatus in FIG. 1. The separation apparatus includes:
absorption tower 3 to provide the CO₂-containing phase change solution;
phase separator 1 with exhaust port 4 at the upper end for separating the CO₂-containing phase change solution ;
bubble generator 2 installed at the bottom of the phase separator 1 for generating bubbles and passing bubbles into the phase separator to disturb the CO₂-containing phase change solution. Bubbles are produced by passing gas into the bubble generator 2;
regeneration tower 6 connected to the lower outlet of the phase separator 1 to collect the lower CO₂-rich liquid phase in the phase separator 1 and process regeneration;
lean liquid mixing tank 5 connected to the side outlet of the phase separator 1 to collect the upper CO₂-lean liquid phase in the phase separator 1.

In the following examples, flue gas containing 12 vol% CO₂ is passed into the absorption tower 3 to obtain CO₂-containing phase change solution. The CO₂-containing phase change solution is input from the absorption tower 3 to the phase separator 1, and gas is introduced into the bubble generator 2 installed in the phase separator 1 to generate bubbles to disturb the CO₂-containing phase change solution in the phase separator 1 to obtain the lower CO₂-rich liquid phase and the upper CO₂-lean liquid phase;
The lower CO₂-rich liquid phase enters the regeneration tower 6 through the lower outlet of the phase separator 1 and is then regenerated;
The upper CO₂-lean liquid phase enters the lean liquid mixing tank 5 through the side outlet of the phase separator 1.

In the following examples, the CO₂ capture rate refers to the ratio of the difference between the content of CO₂ in the raw gas and the content of CO₂ in the purified gas to the content of CO₂ in the raw gas.

In the following examples, the antioxidant effect is inferred based on the decrease in amine concentration after long-term stable operation. The lower the concentration of solvent substances such as amine decreases, the better the antioxidant effect.

In the following examples, the internal surface roughness Ra of the phase separator is 10 µm.

### Example 1

The solvent of phase change solution is solvent A, and the flow rate of phase change solution is 25 L/h. the height-to-diameter ratio of phase separator is 5. The flow rate of nitrogen is 250 L/h, the diameter of bubbles is 50µm, and the volume ratio of nitrogen to phase change solution is 10. The separation temperature is 40 °C.

The CO₂-containing phase change solution contains 3.4 mol CO₂ /kg solvent.

The CO₂ capture rate is 90%. After 240 hours of operation, the amine concentration of the lower CO₂-rich liquid phase dropped by 2%.

### Example 2

Compared with Example 1, the difference is that the flow rate of phase change solution is 20 L/h, and the volume ratio of nitrogen to phase change solution is 12.5. Other conditions in this example are the same as in Example 1.

The CO₂-containing phase change solution contains 3.35 mol CO₂ /kg solvent.

The CO₂ capture rate is 88%. After 240 hours of operation, the amine concentration of the lower CO₂-rich liquid phase dropped by 2.1%.

### Example 3

Compared with Example 1, the difference is that the flow rate of phase change solution is 20 L/h, the flow rate of nitrogen is 500 L/h, and the volume ratio of nitrogen to phase change solution is 25. Other conditions in this example are the same as in Example 1.

The CO₂-containing phase change solution contains 3.41mol CO₂ /kg solvent.

The CO₂ capture rate is 90.2%. After 240 hours of operation, the amine concentration of the lower CO₂-rich liquid phase dropped by 2.0%. Compared with Example 1, the flow rate of solvent A is reduced and the flow rate of nitrogen is increased. As a result, the CO₂ capture rate is equivalent to that of Example 1.

### Example 4

Compared with Example 2, the difference is that the diameter of bubbles is 30µm. Other conditions in this example are the same as in Example 2.

The CO₂-containing phase change solution contains 3.38mol CO₂ /kg solvent.

The CO₂ capture rate is 89.1%. After 240 hours of operation, the amine concentration of the lower CO₂-rich liquid phase dropped by 2.1%.

### Example 5

Compared with Example 3, the difference is that the diameter of bubbles is 30µm. Other conditions in this example are the same as in Example 3.

The CO₂-containing phase change solution contains 3.43mol CO₂ /kg solvent.

The CO₂ capture rate is 91%. After 240 hours of operation, the amine concentration of the lower CO₂-rich liquid phase dropped by 1.9%.

### Example 6

Compared with Example 1, the difference is that the height-to-diameter ratio of phase separator is 10. Other conditions in this example are the same as in Example 1.

The CO₂-containing phase change solution contains 3.45 mol CO₂ /kg solvent.

The CO₂ capture rate is 92%. After 240 hours of operation, the amine concentration of the lower CO₂-rich liquid phase dropped by 1.9%.

### Example 7

The solvent of phase change solution is solvent B, and the flow rate of phase change solution is 30 L/h. the height-to-diameter ratio of phase separator is 10. The flow rate of nitrogen is 500 L/h, the diameter of bubbles is 30µm, and the volume ratio of nitrogen to phase change solution is 16.67. The separation temperature is 40 °C.

The CO₂-containing phase change solution contains 3.5mol CO₂ /kg solvent.

The CO₂ capture rate is 91%. After 240 hours of operation, the amine concentration of the lower CO₂-rich liquid phase dropped by 2.0%.

### Example 8

The solvent of phase change solution is solution C, and the flow rate of phase change solution is 20 L/h. the height-to-diameter ratio of phase separator is 10. The flow rate of nitrogen is 500 L/h, the diameter of bubbles is 30µm, and the volume ratio of nitrogen to phase change solution is 25. The separation temperature is 40 °C.

The CO₂-containing phase change solution contains 4.0mol CO₂ /kg solvent.

The CO₂ capture rate is 95%. After 240 hours of operation, the amine concentration of the lower CO₂-rich liquid phase dropped by 1.8%.

### Example 9

Compared with Example 1, the difference is that CO₂ is passed into the bubble generator installed in phase separator to generate bubbles to disturb the CO₂-containing phase change solution in phase separator to obtain the lower CO₂-rich liquid phase and the upper CO₂-lean liquid phase. Other conditions in this example are the same as in Example 1.

The CO₂-containing phase change solution contains 4.0mol CO₂ /kg solvent.

The CO₂ capture rate is 95%. After 240 hours of operation, the amine concentration of the lower CO₂-rich liquid phase dropped by 1.6%.

### Comparative example 1

The solvent of phase change solution is solvent A, and the flow rate of phase change solution is 25 L/h. the height-to-diameter ratio of phase separator is 5. The bubble generator is turned off. The separation temperature is 40 °C. The CO₂-containing phase change solution contains 3.4 mol CO₂ / kg solvent.

The CO₂ capture rate is 80%. After 240 hours of operation, the amine concentration of the lower CO₂-rich liquid phase dropped by 2.8%.

The above content describes in detail the preferred embodiments of the invention, but the invention is not limited thereto. A variety of simple modifications can be made in regard to the technical solution of the invention within the scope of the technical concept of the invention, including a combination of individual technical features in any other suitable manner. Such simple modifications and combinations thereof shall also be regarded as the content disclosed by the invention, and each of them falls into the protection scope of the invention.

## Claims

1. A separation method for CO₂-containing phase change solution, **characterized in that** the method includes: using bubbles to disturb CO₂-containing phase change solution in order to obtain at least two separated liquid phases.

2. The separation method according to claim 1, wherein the diameter of the bubbles is no more than 50 µm.

3. The separation method according to claim 1, wherein the diameter of the bubbles is 15-30 µm.

4. The separation method according to any one of claims 1-3, wherein the gas-liquid volume ratio between the gas used to generate bubbles and the CO₂-containing phase change solution is 10-90.

5. The separation method according to any one of claims 1-4, wherein the gas-liquid volume ratio between the gas used to generate bubbles and the CO₂-containing phase change solution is 20-50.

6. The separation method according to any one of claims 1-5, wherein the gas used to generate bubbles is selected from inert gases.

7. The separation method according to any one of claims 1-6, wherein the gas used to generate bubbles is selected one or more from CO₂, nitrogen and helium.

8. The separation method according to any one of claims 1-7, wherein the gas used to generate bubbles is CO₂.

9. The separation method according to any one of claims 1-8, wherein the separation conditions include: the separation temperature is 35-60 °C.

10. The separation method according to any one of claims 1-9, wherein the method further includes: regenerating the CO₂-rich liquid phase in the two separated liquid phases.

11. The separation method according to any one of claims 1-10, wherein CO₂ in the CO₂-containing phase change solution comes from flue gas produced by coal-fired power generation and/or steelmaking.

12. The separation method according to claim 11, wherein the CO₂ content of the flue gas is 10-20 vol%.

13. The separation method according to any one of claims 1-12, wherein the CO₂-containing phase change solution contains 2.0-4.8 mol CO₂/kg solvent.

14. The separation method according to any one of claims 1-13, wherein:
the solvent in the CO₂-containing phase change solution includes a first solvent and optionally a second solvent, wherein the first solvent is selected from organic amines;
the second solvent is selected one or more from C2-C10 alcohols, water, sulfoxides and polyether.

15. The separation method according to claim 14, wherein the mass content of the first solvent is 15-80 wt% based on the total mass of the solvent.

16. The separation method according to claim 14 or 15, wherein the mass content of the first solvent is 15-30 wt% based on the total mass of the solvent.

17. The separation method according to any one of claims 14-16, wherein the first solvent is selected one or more from alkanolamines, amides and fatty amines.

18. The separation method according to any one of claims 14-17, wherein the first solvent is selected one or more from monoethanolamine, N-methyldiethanolamine, triethylenetetramine, hydroxyethyl ethylenediamine, 2,2-dimethylcyclopropylformamide, N,N-diethylethanolamine and N,N-dimethylcyclohexylamine.

19. The separation method according to any one of claims 14-18, wherein the second solvent is selected one or more from 1-propanol, n-butanol, t-butanol, water, sulfolane, polyether, 2-amino-2-methyl-1-propanol, triethylene glycol and decanol.

20. The separation method according to any one of claims 14-19, wherein:
the solvent of phase change solution includes: 10-90% monoethanolamine and 10-90% sulfolane based on a scale of 100 wt%; or
the solvent of phase change solution includes: 10-50% triethylenetetramine, 30-80% N,N-diethylethanolamine and 5-50% 1-propanol based on a scale of 100 wt%; or
the solvent of phase change solution includes: 10-50%
N-methyldiethanolamine, 30-80% n-butanol and 5-50% water based on a scale of 100 wt%.

21. The separation method according to any one of claims 1-20, wherein the method is performed in a separation apparatus of the CO₂-containing phase change solution, and the separation apparatus includes:
a phase separation unit for separating the CO₂-containing phase change solution to obtain CO₂-rich liquid phase and CO₂-lean liquid phase, and the phase separation unit is provided with an exhaust port;
a bubble generation unit for generating bubbles to disturb the CO₂-containing phase change solution in the phase separation unit;
the separation method includes:
the bubbles generated by the bubble generation unit disturb the CO₂-containing phase change solution in the phase separation unit, and the gas generated by the bubble generation unit is discharged through the exhaust port.

22. The separation method according to any one of claims 1-21, wherein the separation apparatus includes:
a phase separator for separating CO₂-containing phase change solution to obtain the upper CO₂-rich liquid phase and the lower CO₂-lean liquid phase, and the phase separator is provided with an exhaust port;
a bubble generator for generating bubbles to disturb the CO₂-containing phase change solution in the phase separator;
the separation method includes:
the bubbles generated by the bubble generator disturb the CO₂-containing phase change solution in the phase separator, and the gas generated by the bubble generator is discharged through the exhaust port.

23. A separation apparatus for CO₂-containing phase change solution, **characterized in that** the apparatus includes:
an absorption unit for phase change solution to absorb CO₂ to provide the CO₂-containing phase change solution;
a phase separation unit with an exhaust port for separating the CO₂-containing phase change solution to obtain CO₂-rich liquid phase and CO₂-lean liquid phase;
a bubble generation unit for generating bubbles to disturb the CO₂-containing phase change solution in the phase separation unit;
optionally a regeneration unit is included in connection with the phase separation unit for collecting the CO₂-rich liquid phase from the phase separation unit and processing regeneration;
optionally a collection unit is included in connection with the phase separation unit for collecting the CO₂-lean liquid phase from the phase separation unit.

24. The separation apparatus according to claim 23, wherein the apparatus includes:
an absorption tower for phase change solution to absorb CO₂ to provide the CO₂-containing phase change solution;
a phase separator with an exhaust port at the upper end for separating the CO₂-containing phase change solution to obtain the lower CO₂-rich liquid phase and the upper CO₂-lean liquid phase;
a bubble generator for generating bubbles to disturb the CO₂-containing phase change solution in the phase separator;
a regeneration tower connected to the lower outlet of the phase separator to collect the lower CO₂-rich liquid phase in the phase separator and process regeneration;
a lean liquid mixing tank connected to the side outlet of the phase separator to collect the upper CO₂-lean liquid phase in the phase separator.

25. The separation apparatus according to claims 23 or 24, wherein the phase separator or the phase separation unit is set to have an internal surface roughness Ra > 0.4 µm.

26. The separation apparatus according to any one of claims 23-25, wherein the phase separator or the phase separation unit is set to have an internal surface roughness Ra of 5-15 µm.

27. The separation apparatus according to any one of claims 23-26, wherein the height-to-diameter ratio of the phase separator or the phase separation unit is not less than 4.

28. The separation apparatus according to any one of claims 23-27, wherein the height-to-diameter ratio of the phase separator or the phase separation unit is 10-15.

29. The separation apparatus according to any one of claims 23-28, wherein the bubble generator or the bubble generation unit is provided at the bottom of the phase separator or the phase separation unit.
